(19) Europäisches Patentamt

European Patent Office

Office européen des brevets

(11) **EP 1 722 270 A1**

(12) **EUROPEAN PATENT APPLICATION**
published in accordance with Art. 158(3) EPC

(43) Date of publication:
**15.11.2006 Bulletin 2006/46**

(51) Int Cl.:
*G03B 21/20* (2006.01)  *F21S 2/00* (2006.01)
*F21V 7/09* (2006.01)  *F21V 7/10* (2006.01)
*F21V 13/00* (2006.01)  *F21V 29/00* (2006.01)
*G02B 5/10* (2006.01)

(21) Application number: **05710520.7**

(22) Date of filing: **22.02.2005**

(86) International application number:
**PCT/JP2005/002794**

(87) International publication number:
**WO 2005/081056 (01.09.2005 Gazette 2005/35)**

(84) Designated Contracting States:
**BE DE FR GB NL**

(30) Priority: **23.02.2004 JP 2004046577**

(71) Applicant: **SHARP KABUSHIKI KAISHA**
**Osaka-shi, Osaka 545-8522 (JP)**

(72) Inventors:
• **KYOMOTO, Tadao**
**2710062 (JP)**

• **SAITO, Sakae**
**2630051 (JP)**
• **TAKEDA, Akinobu**
**3292735 (JP)**

(74) Representative: **Brown, Kenneth Richard et al**
**R.G.C. Jenkins & Co.**
**26 Caxton Street**
**London SW1H 0RJ (GB)**

(54) **LIGHT SOURCE APPARATUS AND VIDEO IMAGE DISPLAYING APPARATUS USING THE SAME**

(57)    The invention is to provide a simple and compact configuration which can still be improved in the efficiency of light condensation to a predetermined small-diametric area.

The present invention is a device comprising: an arc tube 20 having a pair of main electrodes 21 and 22; and a reflector 30 for reflecting the outgoing light emitted from the arc tube 20, the electrode axis O1 of the main electrodes 21 and 22 being arranged to cross the light axis LA of the outgoing light. The reflector 30 is formed of a first reflector portion 31 having a spherical surface centered at the light generation point L0 of the arc tube 20 and a second reflector portion 32 having a curved surface different from the first reflector portion 31, and a condenser 40 that condenses the outgoing light emitted from the arc tube 20 to other than the second reflector portion 32 and illuminates the condensed light in a predetermined direction or to a predetermined area is provided.

*FIG.1*

EP 1 722 270 A1

**Description**

Technical Field

The present invention relates to a light source device having a reflector for reflecting the outgoing light that is emitted from an arc tube and a video display apparatus using this.

Background Art

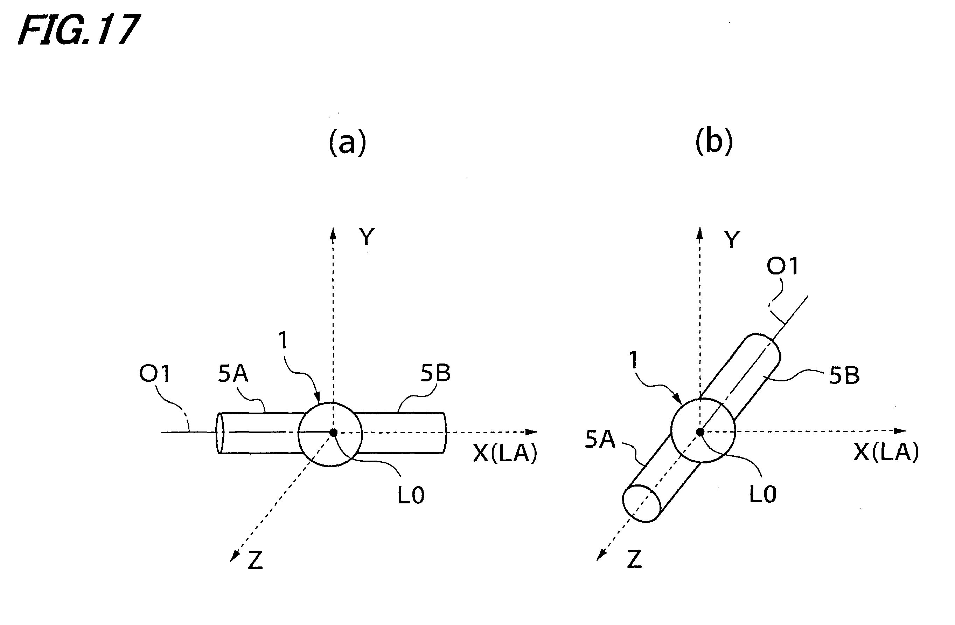

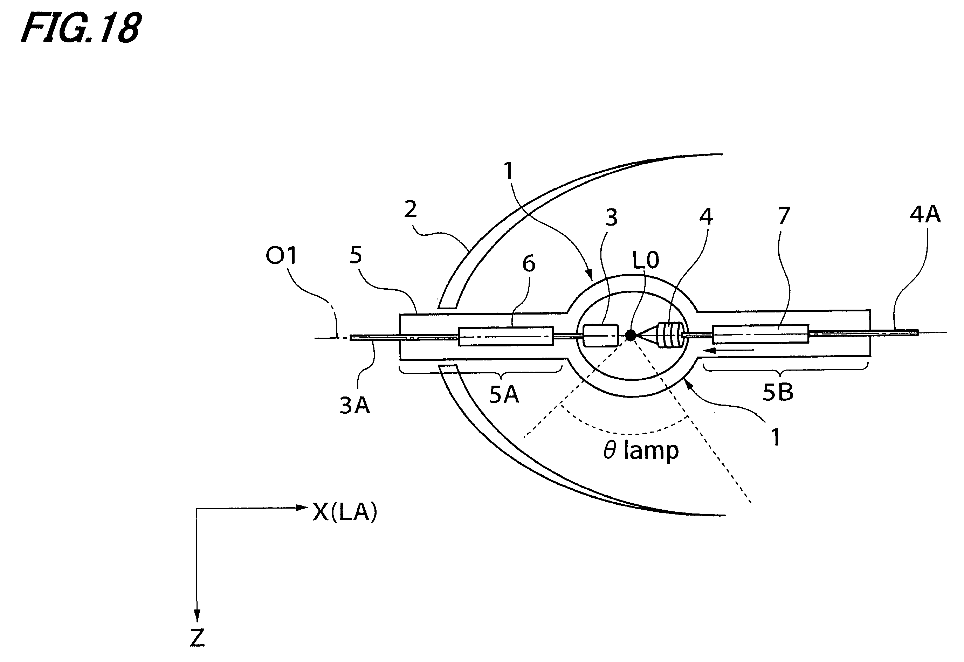

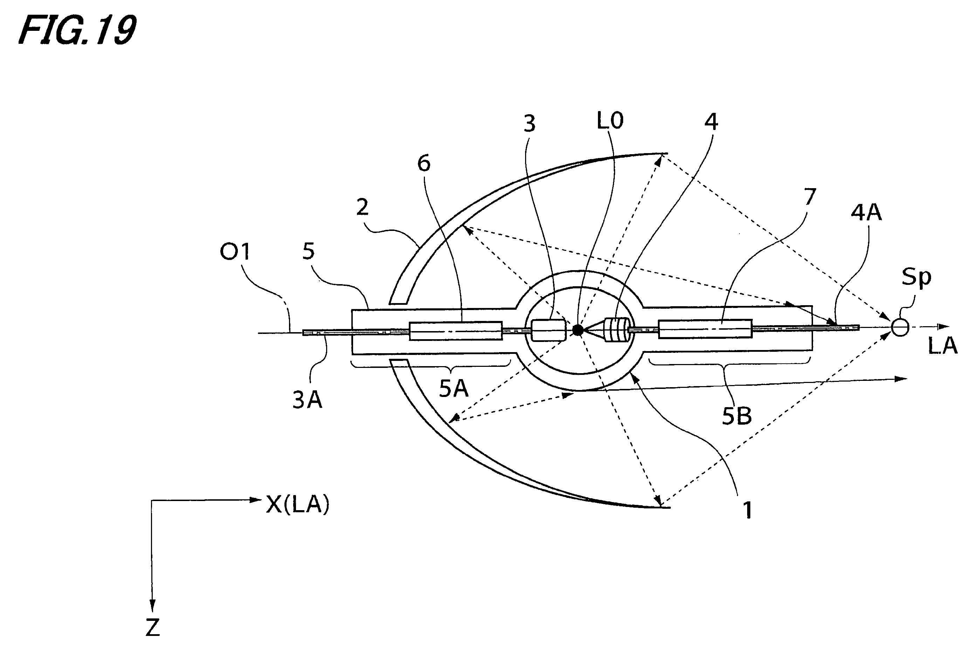

Referring to FIGS. 17 to 23, the background art of the present invention will be described. FIGS. 17 (a) and (b) are comparative illustrations showing the directions of arrangement of arc tubes; FIG. 18 is a horizontal sectional view showing a schematic configuration of a light source device of an optical-axis parallel arrangement type; FIG. 19 is a horizontal sectional view showing the behavior of the outgoing light emitted from the light generation point of the light source device of the optical-axis parallel arrangement type shown in FIG. 18.
Conventionally, in the light source devices used for projection type display apparatuses and the like which need a high-luminance light source, arc tubes which achieve illumination by causing arc discharge, such as a metal halide lamp, xenon short arc lamp and high-pressure type mercury lamp have been employed.
As shown in FIG. 18, the light source device is composed of an arc tube 1 and a reflector 2 made up of a heat-resistance glass substrate or ceramic substrate for reflecting the outgoing light emitted from this arc tube 1.

As shown in FIGS. 17(a), (b) and 18, arc tube 1 is comprised of an anode electrode 3 and a cathode electrode 4, arranged on a line cutting through a light generation point (center of light emission) L0 and on both sides of the light generation point and sealed in a glass tube 5. The light source tubes can be generally classified into the optical axis parallel arrangement type as the conventional art and the optical axis perpendicular arrangement type, depending on the orientation of arrangement of this arc tube 1. Here, the common center axis cutting through both the anode electrode and the cathode electrode will be called "electrode axis O1".

Connected to anode electrode 3 is an anode-side lead wire 3A while a molybdenum sheet 6 is welded to the anode-side lead wire 3A.
Similarly, connected to cathode electrode 4 is a cathode-side lead wire 4A while a molybdenum sheet 7 is welded to the cathode-side lead wire 4A. Here, 5A and 5B designate sealed portions in which anode-side lead wire 3A and cathode-side lead wire 4A are sealed, respectively.

The optical-axis parallel arrangement type indicates a configuration in which, with the X-, Y- and Z-axes shown in FIG. 17 (a), when the optical axis LA is aligned with the X-axis, the electrode axis O1 of arc tube 1 also lies in the X-direction. The optical-axis perpendicular arrangement type indicates a configuration in which, as shown in (b) in the same figure, the electrode axis O1 of arc tube 1 lies in the Z-direction.
In the above configurations, the outgoing light emitted from arc tube 1 is reflected by reflector 2 in a predetermined direction or to a predetermined area.

Meanwhile, in the case of the aforementioned optical-axis parallel arrangement type, as shown in FIGS. 18 and 19, there exits cathode electrode 4 in the irradiated direction of the outgoing light beams with respect to the light generation point L0, so that sealed portion 5B on one side of arc tube 1 becomes an obstacle that blocks the path of the outgoing light beams, causing the problem that the use efficiency of the outgoing light emitted from the light source is degraded.

In order to make improvement against this problem, Japanese Patent Application Laid-open Hei 2-55325 discloses a light source device of the optical-axis perpendicular arrangement type. This will be referred to as "the first prior art".
However, there tends to be occur a lack of balance in the light output distribution with the light source device of the optical-axis perpendicular arrangement type. For this reason, proposals such as Japanese Patent Application Laid-open Hei 4-242064, Japanese Patent Application Laid-open Hei 6-214115 and others have been disclosed in which a condenser lens or fresnel lens is laid out in the full range of the outgoing light beams. This will be referred to as "the second prior art".

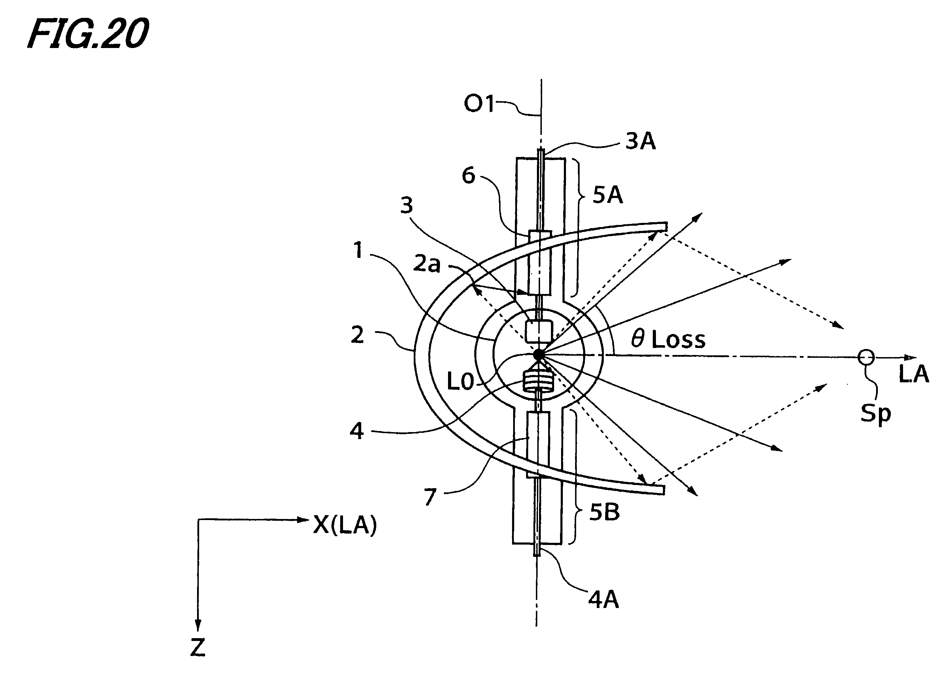

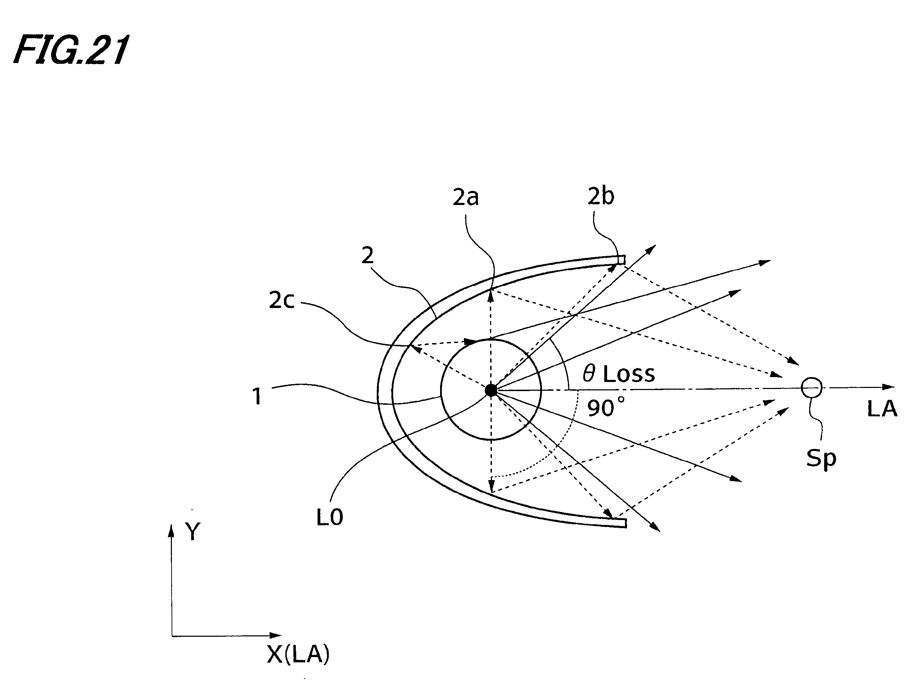

FIGS. 20 and 21 show one example of the light source device according to the first prior art. FIG. 20 is a top view showing a light source device of the optical-axis perpendicular arrangement type according to one example of the first prior art, using a reflector having an elliptic reflecting surface. FIG. 21 is a side view showing a light source device according to another example of the first prior art, where a reflector having an elliptic light reflecting surface is used and the electrode axis of the arc tube is arranged approximately perpendicularly to the optical axis.
Herein, the configurations of the light source devices shown in FIGS. 20 and 21 are almost equivalent to that of the light source device shown in FIGS. 18 and 19, except in that the direction of the arc tube is different (the optical-axis parallel arrangement type), so the corresponding components are allotted with the same reference numerals and detailed described is omitted.

Further, in FIGS. 20 and 21, the direction of the optical axis is aligned along the X-axis, the height of the final assembled product is aligned with the Y-axis and the direction of the depth of the final assembled product is aligned with the Z-axis. The view of an X-Z cross-section is referred to as a top view and the view of a X-Y plane is referred to as a side view.

The light source device of the optical-axis parallel arrangement type according to the example shown in FIG. 20, of the outgoing light beams emitted from light generation point L0, the outgoing light beams reflected on the elliptically curved light reflecting surface of reflector 2 involve the components that reach a predetermined condensed spot Sp and the components that irradiate molybdenum sheet 6 on the anode electrode 3 side and is absorbed thereto as the outgoing light beam that is reflected at a reflection point 2a on the reflecting surface.

Actually, when viewed from the optical axis direction LA, part of the outgoing light beams irradiated on the light reflecting surface at the rear of arc tube 1 illuminate anode electrode 3, cathode electrode 4 and molybdenum sheets 6 and 7 and is absorbed thereto, so that the use efficiency of the outgoing light beams emitted from the light source is degraded, causing temperature rise at sealed portions 5A and 5B of arc tube 1.

Further, since light beams ranging from optical axis LA to θloss do not illuminate the light reflecting surface, most of them do not reach the condensed spot Sp, resulting in loss of light.

Shown in FIG. 21 is a side view of a light source device of the optical-axis perpendicular arrangement type according to another example, in which the electrode axis O1 of arc tube 1 is arranged approximately perpendicularly to the optical axis LA while the light reflecting surface of reflector 2 is formed with an ellipsoid.

The distribution of light from arc tube 1 is limited within an angular range defined by LA-L0-2a(2b) and corresponds to the above-described distribution of light θ lamp shown in FIG. 18. When viewed from the side shown in FIG. 21, light beams are emitted in all directions in the X-Y plane from light generation point L0 of arc tube 1 as the center, forming a 360 degree light distribution.

In this case, a light beam emitted from light generation point L0 and reflected off a reflection point 2c of reflector 2, or the outgoing light beam reflected off the light reflecting surface located at the rear of arc tube 1, viewed from the optical axis LA, is deflected on the outer surface of glass tube 5 of arc tube 1 and cannot reach the desired condensed spot Sp, resulting a loss of light.

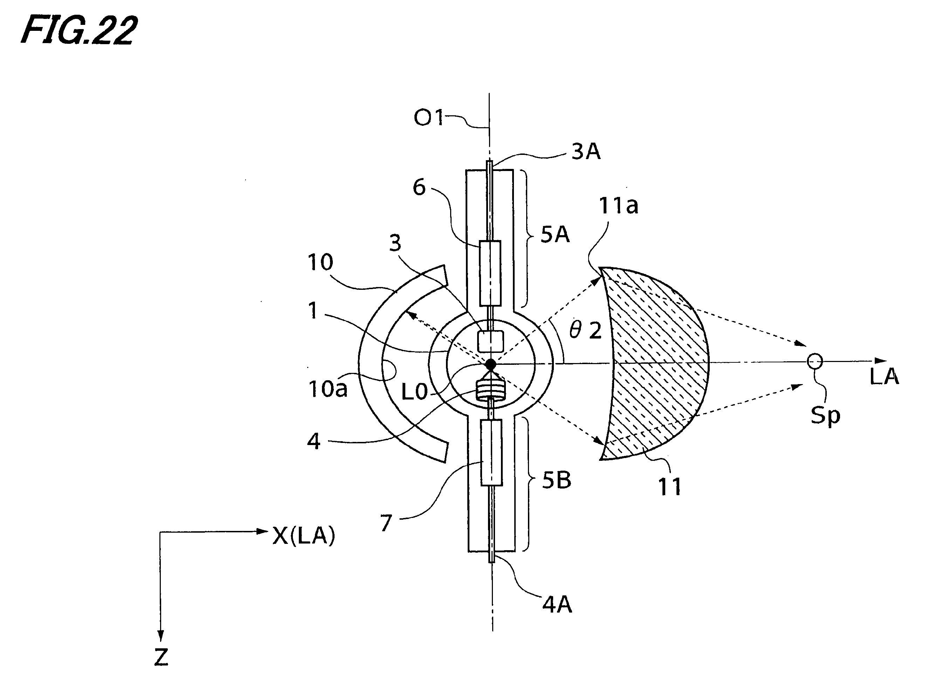

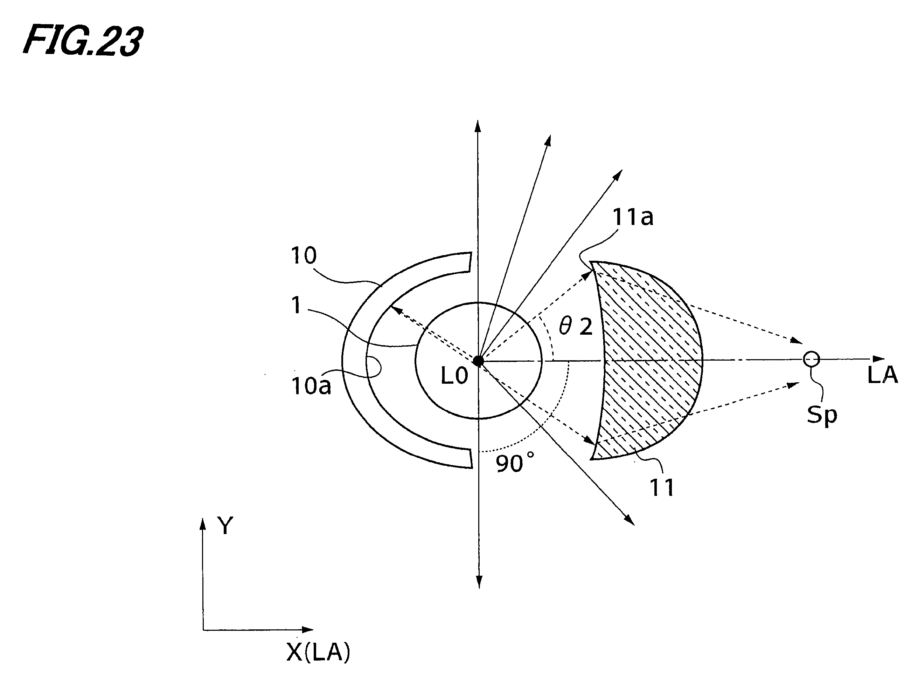

Next, the light source device according to the second prior art will be described with reference to FIGS. 22 and 23. FIG. 22 is a top view of a light source device of an optical-axis perpendicular arrangement type according to one example of the second prior art, in which the reflecting surface of a reflector is formed with a concentric surface and a condenser lens is provided. FIG. 23 is a side view of the light source device.

The light source device shown in FIGS. 22 and 23 has the same configuration as that of the light source device shown in FIGS. 20 and 21, except in that the reflector surface 10a of a reflector 10 is formed with a spherical surface and a condenser lens 11 is disposed, so that the same components as those are allotted with the same reference numerals with detailed description omitted.

The light source device configuration shown in FIG. 22 is constructed such that, in the light source device of an optical-axis perpendicular arrangement type (shown in FIG. 20) according to the first prior art, reflecting surface 10a of reflector 10 located at the rear of arc tube 1, viewed from optical axis LA, is made to be a spherical surface centered at light generation point L0 and condenser lens 11 is arranged in front of arc tube 1, viewed from optical axis LA.

In this configuration, the outgoing light beams emitted from arc tube 1 go out from light generation point L0 toward condenser lens 11 in a light distribution with an angle θ2 (the same as the θlamp in FIG. 18).

Light beams also go out from light generation point L0 to the reflector 10 side with angle θ2, and ideally pass through light generation point L0 once again and go out to the condenser lens 11 side with a light distribution with angle θ2. In this configuration, condenser lens 11 is designed based on the light distribution of arc tube 1, so that the light beams having an angular spread of θ2 are condensed; the outgoing light beam incident on an incident point 11a of condenser lens 11 reaches condensed spot Sp.

It seems that almost all outgoing light beams reach the predetermined condensed spot Sp in FIG. 22. However, referring to the side view shown in FIG. 23, the outgoing light beams from the arc tube spread from the center or light generation point L0 in all directions in the X-Y plane, forming a 360 degree light distribution.

In this case, the light beams emitted from arc tube 1 involve the components that go out directly from light generation point L0 to the lens 11 side with an outgoing angle of 180 deg. and the components that go directly from light generation point L0 toward the concentric reflecting surface 10a of reflector 10 with an outgoing angle of 180 deg. and then ideally pass the light generation point L0 once again to illuminate the condenser lens 11 side.

Of these outgoing light beams, only an angular spread of angle θ2 of outgoing light beams enter condenser lens 11. That is, only the light beams that are incident on the effective diameter of condenser lens 11 will reach the condensed spot Sp.

Patent document 1:

Japanese Patent Application Laid-open H2-55325

Patent document 2:

Japanese Patent Application Laid-open H4-242064

Patent document 3:

Japanese Patent Application Laid-open H6-214115

Disclosure of Invention

Problems to be Solved by the Invention

However, in the light source device of the optical-axis perpendicular arrangement type represented as the first prior art, when the reflecting surface of the reflector is formed with a non-spherical surface such as an ellipsoid, hyperboloid or the like, of the outgoing beams emitted from the arc tube, the light components that do not illuminate the non-spherical reflecting surface of the reflector cannot reach the desired condensed spot or area, resultantly the light collection efficiency degrades.

On the other hand, in the light source device of the optical-axis perpendicular arrangement type represented as the second prior art, when the reflecting surface of the reflector arranged at the rear of an arc tube is formed with a concentric surface and a condensing element such as a lens or the like is disposed in front of the arc tube, viewed from the optical axis, there is a limit to the angle for collecting the outgoing light when the condensing element collects the outgoing beams from the arc tube and from the concentric reflecting surface. Resultantly, also in this case there occurs the problem that the light collection efficiency degrades.

It is therefore an object of the present invention to provide a light source device which has a simple and compact configuration and can still be improved in the efficiency of light condensation to a predetermined small-diametric area and hence is free from degradation of the light collection efficiency, as well as providing a video display apparatus using this.

Means for Solving the Problems

The light source device and video display apparatus according to the present invention in order to achieve the above object have the configurations as follows.
A light source device according to the first aspect of the present invention includes: an arc tube having a pair of main electrodes; and a reflector for reflecting an outgoing light emitted from the arc tube, the electrode axis of the main electrodes being arranged to cross a light axis of the outgoing light, and is characterized in that the reflector is formed of a first reflector portion having a spherical surface centered at a light generation point of the arc tube and a second reflector portion having a curved surface different from the first reflector portion, and a condenser that condenses the outgoing light emitted from the arc tube to other than the second reflector portion so as to illuminate the condensed outgoing light in a predetermined direction or to a predetermined area is provided.

According to the second, third and fourth aspects of the present invention, in the first aspect, the second reflector portion is formed with an ellipsoid, hyperboloid or, a spherical surface different in curvature from the spherical surface.

According to the fifth aspect of the present invention, in any of the first to fourth aspects, a luminance equalization means for equalizing (flattening) a surface luminance of the light beams by shaping the outgoing light emitted from the arc tube into a designated pattern and by mixing by multiple reflection is further provided.
According to the sixth aspect of the present invention, in any of the first to fourth aspects, a luminance equalization means for equalizing (flattening) a surface luminance of the light beams by shaping the outgoing light emitted from a light source into a designated pattern and by mixing by multiple reflection is further provided.
In these cases, the reflector and the luminance equalization means can be integrally formed.

According to the seventh aspect of the present invention, in the fifth or sixth aspects, sealed portions that seal the main electrodes are formed on both sides of the light generation point of the arc tube, and heat radiation members are arranged between these sealed portions and the reflector.

According to the eighth or ninth aspect of the present invention, in any of the first to seventh aspects, the reflector has a separable structure such that it can be separated along a plane perpendicular to the optical axis or it can be separated along a plane parallel to the optical axis.

A video display apparatus according to the tenth aspect of the present invention is characterized in that a light source device according to any one of the above first through ninth aspects is used.

Effect of the Invention

According to the first to eleventh aspects of the present invention, since the reflector is formed of the first reflector portion having the spherical surface centered at the light generation point of the arc tube and the second reflector portion having the curved surface different from the first reflector portion, and the condenser that condenses the light emitted from the arc tube to other than the second reflector portion is provided, it is possible to improve the efficiency of condensation of light to a designated small-diametric area with a simple structure. In one word, outgoing light from the light generation point of the arc tube can be efficiently utilized.

According to individual aspects of the present invention, in addition to the above common effect obtained from the first to eleventh aspects of the present invention, the following effect can be obtained.

According to the second aspect of the present invention, since the second reflector portion is formed with the ellipsoid, it is possible to provide a short-focal length design with a small image-forming magnification. Accordingly, this configuration is able to achieve good light condensation efficiency with a small spot and contributes to making the light-source device compact.

According to the third aspect of the present invention, since the second reflector portion is formed with the hyperboloid, of the outgoing light emitted from the arc tube the components that are reflected off the second reflector portion 42 can be formed into outgoing light beams that are approximately parallel to the optical axis.

According to the fifth aspect of the present invention, since a luminance equalizationmeans for equalizing (flattening) the surface luminance of the light beams by shaping the outgoing light emitted from the arc tube into a designated pattern and by mixing by multiple reflection is provided, it is possible to obtain display images free from luminance unevenness.

According to the sixth aspect of the present invention, since a luminance equalization means for equalizing (flattening) the surface luminance of the light beams by shaping the outgoing light emitted from a light source into a designated pattern and by mixing by multiple reflection is provided, it is possible to obtain display images free from luminance unevenness.

According to the seventh aspect of the present invention, since the reflector and the luminance equalization means are integrally formed, it is possible to provide a simple configuration.

According to the eighth aspect of the present invention, since sealed portions that seal the main electrodes are formed on both sides of the light generation point of the arc tube, and heat radiation members are arranged between these sealed portions and the reflector, it is possible to efficiently illuminate the outgoing light beams from the arc tube on the screen without the necessity of optical axis alignment of the light-source device with the luminance equalization means and other works after the assembly of the product is completed. This configuration is effective in improving the light usage efficiency and preventing luminance variation of final assembled products.

Further, since it is possible to perform optimal temperature control of the arc tube itself during continuous illumination, and it is also possible to arrange the auxiliary electrodes in the area other than the light output distribution of the discharge tube, the use efficiency of the outgoing light emitted from the light source will be no longer hindered.

According to the ninth aspect of the present invention, since the reflector has the separable structure such that it can be separated along the plane perpendicular to the optical axis, the angle formed between the vapor deposition source and the normal to the reflection film forming surface of the reflector during vapor deposition, or the incident angle of vapor deposition molecules, becomes smaller and the flight distances of vapor deposition molecules are made uniform. As a result, it is possible to improve the film forming accuracy during vapor deposition or sputtering of dielectric reflection multi-coating, total-reflection coating, etc., even with a complex configuration, hence improve the reflectance of the reflector, thus making it possible to enhance the use efficiency of the outgoing light emitted from the light source.

According to the tenth aspect of the present invention, since the reflector has the separable structure such that it can be separated along the plane parallel to the optical axis, the angle formed between the vapor deposition source and the normal to the reflection film forming surface of the reflector during vapor deposition, or the incident angle of vapor deposition molecules, becomes smaller and the flight distances of vapor deposition molecules are made uniform. As a result, it is possible to improve the film forming accuracy during vapor deposition or sputtering of dielectric reflection multi-coating, total-reflection coating, etc., even with a complex configuration, hence improve the reflectance of the reflector, thus making it possible to enhance the use efficiency of the outgoing light emitted from the light source. This configuration is especially effective for small reflectors with a large depth.

Brief Description of Drawings

[FIG. 1] FIG. 1 is a horizontal sectional view showing a basic configuration of a light source device according to the first embodiment of the present invention.

[FIG. 2] FIG. 2 is a side sectional view of the above light source device.

[FIG. 3] FIG. 3 is a horizontal sectional view of a light source device according to the second embodiment of the present invention.

[FIG. 4] FIG. 4(a) is a horizontal sectional view showing one example of a specific lens structure for supporting a lens provided for the light source device according to the first embodiment of the present invention; and (b) is a front view showing the lens structure only.

[FIG. 5] FIG. 5(a) is a horizontal sectional view showing a variational example of a specific lens structure; and (b) is a front view showing the lens structure of the variational example.

[FIG. 6] FIG. 6 is a horizontal sectional view for explaining the behavior of the outgoing light emitted from an arc tube and the arrangement position of a condenser in a light source device according to the first embodiment of the present invention.

[FIG. 7] FIG. 7 is an illustrative view showing the focal length and image forming magnification of a lens.

[FIG. 8] FIG. 8 is a comparative chart showing the results of the use efficiency of the outgoing light emitted from a light source when the diagonal size of the predetermined area is varied.

[FIG. 9] FIG. 9 is a horizontal sectional view showing a basic configuration of a light source device according to the third embodiment of the present invention.

[FIG. 10] FIG. 10 is a horizontal sectional view showing a light source device according to the fourth embodiment of the present invention.

[FIG. 11] FIG. 11 is a horizontal sectional view showing a light source device according to the fifth embodiment of the present invention.

[FIG. 12] FIG. 12 is a horizontal sectional view showing a light source device according to the sixth embodiment of the present invention.

[FIG. 13] FIG. 13 is a schematic view showing a reflector according to the first variational example.

[FIG. 14] FIG. 14 (a) is a schematic horizontal sectional view showing a reflector according to the second variational example; and (b) is a sectional view cut along a line I-I shown in (a).

[FIG. 15] FIG. 15 (a) is a schematic horizontal sectional view showing a reflector according to the third variational example; and(b) is a sectional view cut along a line II-II shown in (a).

[FIG. 16] FIG. 16 is a schematic view showing an overall configuration of a video display apparatus according to one embodiment of the present invention.

[FIG. 17] FIGS. 17(a) and (b) are comparative illustrative views showing the directions of arrangement of arc tubes.

[FIG. 18] FIG. 18 is a horizontal section showing a schematic configuration of a light source device of the optical-axis parallel arrangement type.

[FIG. 19] FIG. 19 is a horizontal section showing the behavior of the outgoing light emitted from a light generation point of the light source device of the optical-axis parallel arrangement type shown in FIG. 18.

[FIG. 20] FIG. 20 is a top view showing a light source device of an optical-axis perpendicular arrangement type according to one example of the first prior art, wherein the reflecting surface of a reflector is formed with an ellipsoid.

[FIG. 21] FIG. 21 is a side view showing a light source device according to another example of the first prior art, wherein the light reflecting surface of a reflector is formed with an ellipsoid and the electrode axis of an arc tube is arranged perpendicularly to the optical axis.

[FIG. 22] FIG. 22 is a top view showing a light source device of the optical-axis perpendicular arrangement type according to one example of the second prior art, wherein the reflecting surface of a reflector is formed with a concentric spherical and a condenser lens is provided.

[FIG. 23] FIG. 23 is a side view showing the above light source device.

Description of Reference Numerals

| | |
|---|---|
| 20 | arc tube |
| 21, 22 | main electrode |
| 23a, 23b | sealed portion |
| 30, 44, 70, 80, 90 | reflector |
| 31 | first reflector portion |
| 32 | second reflector portion |
| 40 | lens (condenser) |
| 44a | luminance equalization means |
| 60 | Radiating member |
| B, C, D, E, F, G | light source device |

| O1 | electrode axis |
| LA | optical axis |
| L0 | light generation point |
| H | video display apparatus |

Best Mode for Carrying Out the Invention

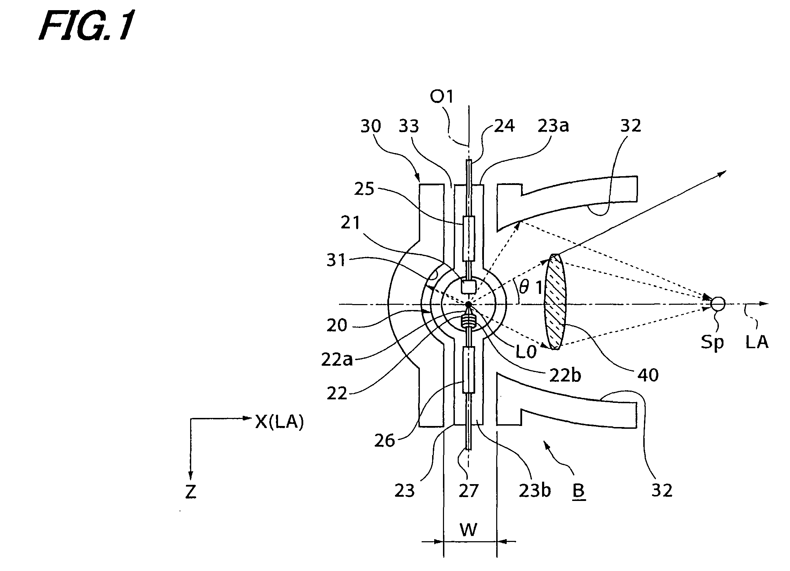

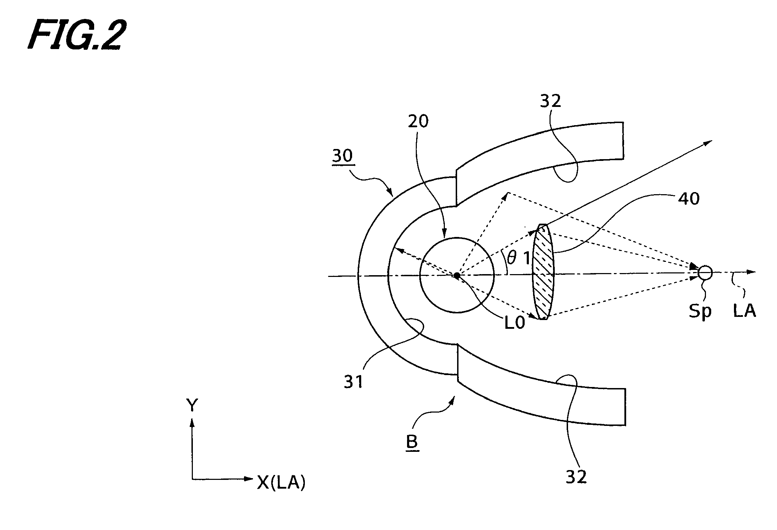

Now, the embodiment modes of the present invention will be described with reference to FIGS. 1 to FIG. 16. First, referring to FIGS. 1 and 2, a light source device according to the first embodiment of the present invention will be described. FIG. 1 is a horizontal sectional view showing a basic configuration of the light source device according to the first embodiment of the present invention; and FIG. 2 is a side sectional view of this light source device.

A light source device B according to the first embodiment of the present invention includes: as shown in FIG. 1, an arc tube 20 as a light source; a reflector 30 that reflects the outgoing light emitted from this arc tube 20; and a condenser 40.

Though arc tube 20 has the same configuration as that of the aforementioned arc tube 1, the configuration will be described in further detail.

Arc tube 20 is a direct current lighting high-pressure mercury lamp having an approximate diameter of 10 (mm), in which a pair of main electrodes, i.e., an anode electrode 21 and a cathode electrode 22 are sealed in a glass tube 23. Here, the electric power supplied to this arc tube ranges from 150 (W) to 200 (W). Here, 23a designates a sealed portion that seals an anode electrode side lead wire 24 and 23b designates a sealed portion that seals a cathode electrode side lead wire 27.

Cathode electrode 22 is formed of a pointed portion 22a with an enhanced work function for the purpose of activating electron emission and a coiled portion 22b for controlling the work function and regulating electron emission.

Glass tube 23 consists of quartz having a thermal resistance against 1000 deg. C or higher, and mercury and start gases such as argon gas, xenon gas etc., for adjusting the vapor pressure are sealed in the space in which light generation point L0 is sealed.

Anode electrode 21 and cathode electrode 22 are aligned along an electrode axis O1 that cuts through light generation point L0 and arranged at both sides of the light generation point L0. The inter-electrode distance (arc gap) between these anode electrode 21 and cathode electrode 22 ranges from approximately 1.0 (mm) to 1.3 (mm).

Arc tube 20 and an unillustrated arc tube illumination regulator (called "ballast" in general) are electrically connected via anode electrode side lead wire 24 and cathode electrode side lead wire 27 which are exposed outside glass tube 23.

Upon activation of illumination, a potential difference of some kv to some tens kv is generated between anode electrode 21 and cathode electrode 22 so as to cause breakdown of insulation between these anode electrode 21 and cathode electrode 22 and start glow discharge, then develop it into arc discharge, followed by continuation of stable illumination. Here, 25 and 26 designates molybdenum sheets welded to part of anode electrode side lead wire 24 and cathode electrode side lead wire 27.

Reflector 30 is to reflect the outgoing light emitted from arc tube 20 to a predetermined direction, and is composed of a first reflector portion 31 having a spherical surface centered at light generation point L0 of arc tube 20 and a second reflector portion 32 having a curved surface different from the first reflector portion 31.

In the present embodiment, the reflector is formed of an aluminum substrate having a thermal conductivity 200 times as high as glass. Conventionally, other than the aforementioned heat-resistant glass substrate, the reflector is used to be formed of a ceramic substrate.

"A curved surface different from the first reflector portion 31" in this embodiment is an ellipsoid. However, the present invention should not be limited to this. For example, a spherical surface having a curvature different from that of the spherical surface of the first reflector portion 31 is acceptable. Alternatively, a curved surface such as a hyperboloid or the like other than spherical surfaces may be accepted.

Formed between first reflector portion 31 and second reflector portion 32 is a light source fitting groove 33 having a predetermined width W, in which arc tube 20 is placed. "A predetermined width W" is as large as a clearance is marginally formed around sealed portions 23a and 23b of arc tube 20, and can be specified taking into consideration the degree of heat radiation of the arc tube 20.

Formed on the light reflecting surfaces that reflect light beams emitted from the arc tube 20, specifically, first reflector portion 31 and second reflector portion 32, are a dielectric reflection coating (not shown) consisting of laminated $TiO_2$ and $SiO_2$ films.

Specifically, in consideration of heat radiation of reflector 30, a layer for converting the infrared component into heat is formed with oxidation of anodized aluminum, chromium plating, black paint, etc., so as to configure reflector 30 to efficiently absorb and radiate heat. A base coating for buffering and smoothing is applied on the aforementioned layer for converting the infrared component into heat, then multi-layered dielectric reflecting films consisting of $TiO_2$ and $SiO_2$

are formed so that visible light rays reach the predetermined condensed spot.

In the present embodiment, heat from arc tube 20 during continuous illumination is adapted to be absorbed and radiated by reflector 30. However, the configuration is not limited to this, and it is possible to use a metal substrate whose reflecting surface is simply polished. An image reflection coating and a total reflection coating of silver, aluminum are formed on a metal substrate so that ultraviolet rays, infrared rays can be absorbed or radiated.

Next, the positional relationship between the aforementioned reflector 30 and arc tube 20 will be described. Electrode axis O1 of anode electrode 21 and cathode electrode 22 in arc tube 20 is arranged approximately perpendicularly to optical axis LA. In this case, the aforementioned reflecting surface having an ellipsoid(second reflector portion 32) is designed based on the following formulae where light generation point L0 of arc tube 20 is positioned at a first condensed spot F1 and the predetermined condensed spot Sp is positioned at a second condensed spot F2.

As to the symbols shown in the following equations (1) to (4), x, y are the coordinates of a point residing on an circumference of an ellipse in the X-Y coordinate system, a is the length of the major axis of the ellipse (X=0) from the origin on the X-Y coordinate system, b is the minor axis of the ellipse (Y=0) and e is the eccentricity of the ellipse.

$$x^2/a^2 + y^2/b^2 = 1 \qquad \cdots \quad (1)$$

$$e = (a^2 - b^2)^{1/2}/a \qquad \cdots \quad (2)$$

$$F1 = a \times e = L0 \qquad \cdots \quad (3)$$

$$F2 = (-a) \times e = Sp \qquad \cdots \quad (4)$$

The effective diameter of lens 40 as a condenser is designed so as to bring the component that is not illuminated on second reflector portion 32, or the outgoing light beams within the area defined by a spread angle θ1, of the outgoing light emitted from light generation point L0 of arc tube 20, to the desired condensed spot Sp.

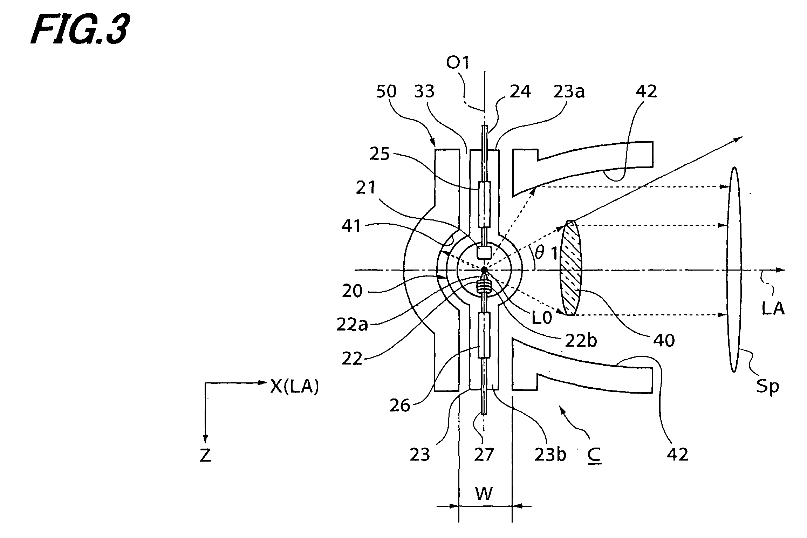

Next, a light source device according to the second embodiment will be described with reference to FIG. 3. FIG. 3 is a horizontal sectional view showing a light source device according to the second embodiment.

A light source device C according to the second embodiment has the same configuration as that of light source device B according to the aforementioned first embodiment except for the reflector configuration, so that the same components are allotted with the same reference numerals without detailed description. Here, description will be made on the reflector that has a different configuration.

A reflector 50 of a variational example has the same configuration as the aforementioned reflector 30 in respect that the reflector is formed of a first reflector portion 41 having a spherical surface centered at light generation point L0 of arc tube 20 and a second reflector portion 42 having a curved surface that is different from the first reflector portion 41. In the reflector 50 of the variational example, "a curved surface that is different from the first reflector portion 41" is a hyperboloid (paraboloid).

Specifically, of the outgoing light from light generation point L0 of arc tube 20, the component that is reflected off the second reflector portion 42 is formed into light beams approximately parallel to optical axis LA to irradiate the predetermined area Sp. In this case, if no lens 40 is arranged, most of the outgoing light beams that are emitted from arc tube 20 within angle θ1 as shown in FIG. 3 and do not illuminate the second reflector portion 42 do not reach the aforementioned predetermined areas Sp, hence resulting in loss of light. In other words, in the present embodiment, no loss of light will occur since lens 40 is disposed.

When the second reflector portion 42 is formed with a hyperboloid as in this embodiment, a fly-array or the like may be arranged on the optical path between the light source device and the predetermined area in order to make improvement against luminance unevenness in the aforementioned predetermined area Sp.

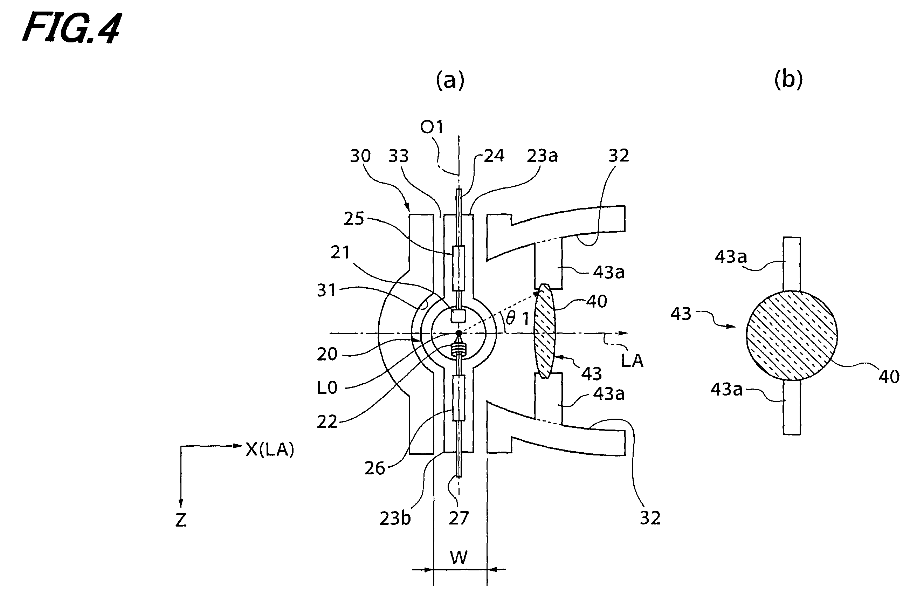

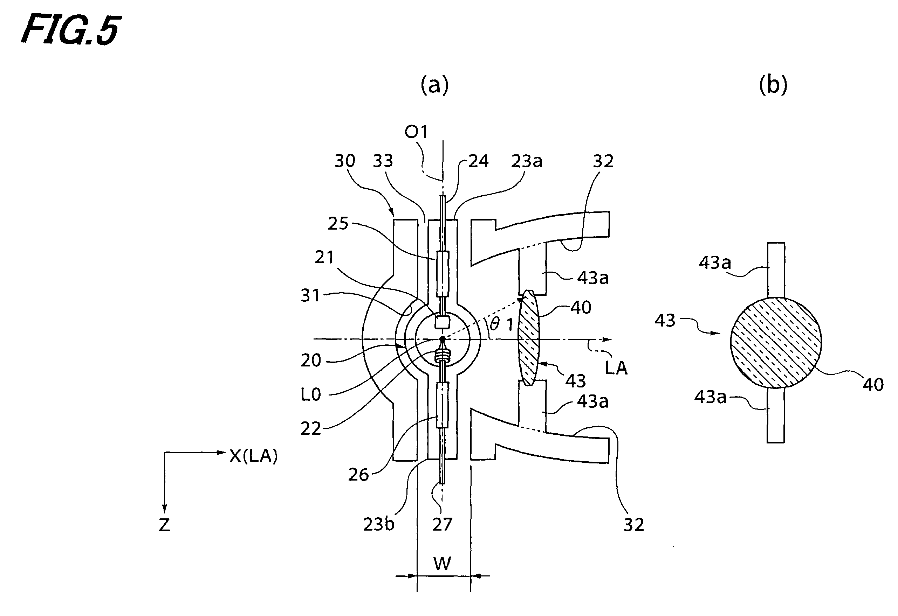

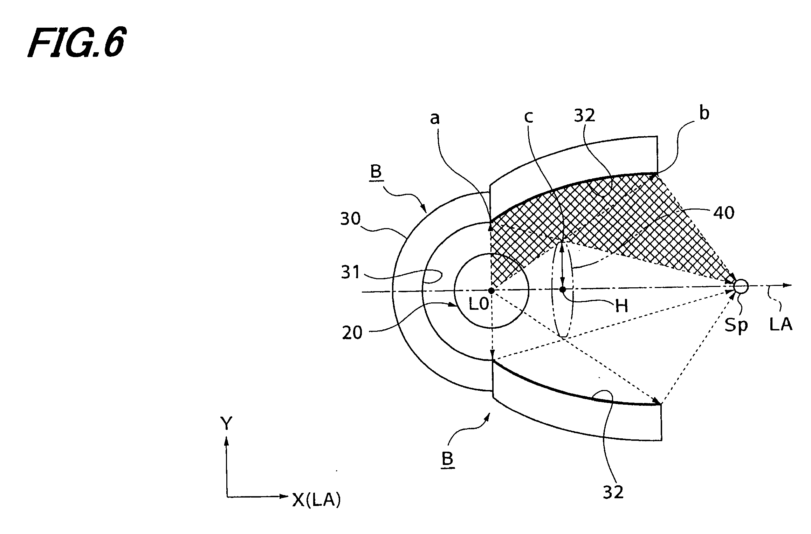

FIG. 4(a) is a horizontal sectional view showing one example of a specific lens structure for supporting a lens provided for the light source device according to the first embodiment of the present invention; (b) is a front view showing the lens structure only; FIG. 5 (a) is a horizontal sectional view showing a variational example of the same specific lens structure; (b) is a front view showing the lens structure of the variational example. FIG. 6 is a horizontal sectional view for explaining the behavior of the outgoing light emitted from an arc tube and the arrangement position of a condenser in the light source device according to the first embodiment of the present invention.

Here, in FIGS. 4 to 6, the same components as explained in the light source device B according to the first embodiment will be allotted with the same reference numerals without detailed description.

A lens structure 41 as a condenser as shown in FIG. 4 is composed of a biconvex lens 41a for condensing the light beams that do not illuminate the second reflector portion 32 (the component other than the light beams irradiated on the second reflector portion 32, indicated by the broken line area in FIG. 6) and a donut-shaped lens 41b formed of a flat substrate having a center hole with a diameter corresponding to that of lens 41a.

The biconvex lens 41a and donut-shaped lens 41b are assembled by fitting the biconvex lens 41a into the hole 41a' of donut-shaped lens 41b and bonding each other with a heat-resistant adhesive.

The lens structure 41 is fixed by fitting the outer peripheral edge of the donut-shaped lens 42b into a fitting groove 32a that is formed annularly at a predetermined position of second reflector portion 32.

A lens structure (condenser) 43 according to a variational example shown in FIG. 5 is composed of lens holding members 43a and 43a and a lens 40 that is supported between the distal ends of the lens holding members 43a and 43a.

Lens holding members 43a and 43a are fixed at their proximal end to second reflector portion 32 so that their distal ends oppose each other with a necessary distance apart.

According to this configuration, when the distribution of light of arc tube 20 is assumed to be θ1 (see θlamp as shown in FIG. 18) and the effective diameter of lens 40 is greater than θ1, no outgoing light beams illuminate lens holding members 43a and 43a, hence the use efficiency of the outgoing light emitted from the light source will not be lowered.

Here, lens holding members 43a and 43a need not be integrally formed with second reflector portion 32.

Next, the method of placement of the lens will be described with reference to FIG. 6. Since the behavior of the outgoing light beams is symmetry on the top side (in the Y-positive direction) and the bottom side (in the Y-negative direction) with respect to optical axis LA, only the top side will be described for convenience sake.

Of the outgoing light emitted from light generation point L0 of arc tube 20, the light reflected off the first reflector portion 31 located in the rear of arc tube 20 as viewed from optical axis LA, passes through light generation point L0 once again and goes out to the front of arc tube 20 as viewed from optical axis LA.

In this case, of the outgoing light beams emitted to the front of arc tube 20 as viewed from the optical axis LA, light beams which range within an angle (a-L0-b) defined by the light beam (L0-a) that illuminates the innermost portion of second reflector portion 32 and the light beam (L0-b) that illuminates the outermost portion (the vicinity of the opening) of second reflector portion 32, will illuminate the second reflector portion 32.

The light beam (L0-a) that illuminates the innermost portion of the second reflector portion 32, and the light beam (L0-b) that illuminates the outermost portion (the vicinity of the opening) of second reflector portion 32 illuminate condensed spot Sp as the second focus of second reflector portion 32.

If there is no lens 40, most of light beams ranging within the angle defined by b-L0-Sp will not illuminate the second reflector 32. Here, when a point of intersection between the outgoing light beam (L0-b) that is emitted from light generation point L0 of arc tube 20 and illuminates the outermost portion (the vicinity of the opening) of second reflector portion 32 and the light beam (a-Sp) reflected at point a of second reflector portion 32 is designated at c, and when the principal point H (use of a thin lens is presumed) of lens 40 is positioned on the optical axis LA, the distance c-H corresponds to the effective radius of the lens to be arranged.

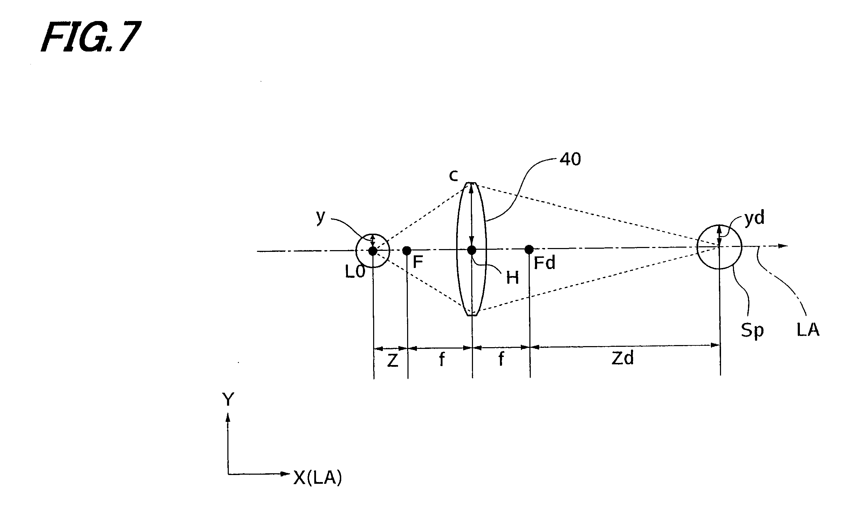

FIG. 7 is an illustrative view showing the focal length and image forming magnification of a lens.

When the light generation point L0 of arc tube 20 is positioned at the object surface with an image height y and the condensed spot Sp is positioned at the image surface with an image height yd, and when the front-side focus of a lens 40 to be laid out is represented as F, the rear-side focus as Fd, the front-side radius of curvature of the lens as R1, the rear-side radius of curvature as R2, the distance from the principal point H to the front-side focus F and the distance from the principal point H to the rear-side focus Fd as f, the distance from the front-side focus F to the object surface as Z, the distance from the rear-side focus Fd to the image surface Sp as Zd, the lens is designed so as to satisfy the following relationship.

$$1/f=(N-1)\{(1/R1)+(1/R2)\}$$

where N is the index of refraction of the lens glass material.

$$y/yd=Z/f \qquad \cdots(5)$$

$$y/yd=f/Zd \qquad \cdots(6)$$

Here, the image forming magnification M is assumed so that

$$M=yd/y,$$

$$Z=f/M \qquad \cdots(7)$$

$$Zd=f \times M \qquad \cdots(8)$$

Further, when symbols are defined so that C-L0-Sp=U (angle of light collection), C-Sp-L0=Ud (angle of light condensation) and C-H=h,

$$U =h/\{(1+1/M) \times f\} \qquad \cdots(9)$$

$$Ud=h/\{(1+ M) \times f\} \qquad \cdots(10).$$

From Eqs. (9) and (10),

$$U/Ud =(1+ M)/(1+1/M)=M(1+ M)/(1+ M)$$

$$=M$$

$$=yd/y \qquad \cdots(11)$$

Here, the arc gap of the high-pressure mercury lamp used in each embodiment was 1. 05 (mm), and based on the size of the incident face of the rod integrator, 3.0x4.0 (mm), the image forming magnification M of the lens 40 was designed so as to be 2.5 to 4. The glass material of the used lens is quartz having an index of refraction of 1.46, based on which the curvature of lens 40 was determined.

When second reflector portion 42 is formed with a hyperboloid as shown in FIG. 3, it is possible to design the layout so that light is adapted to irradiate the predetermined area Sp approximately perpendicularly thereto (approximately parallel with optical axis LA) after incidence of the outgoing light from arc tube 20 on the lens 40, by setting lens 40 at the principal point H in the same manner as above.

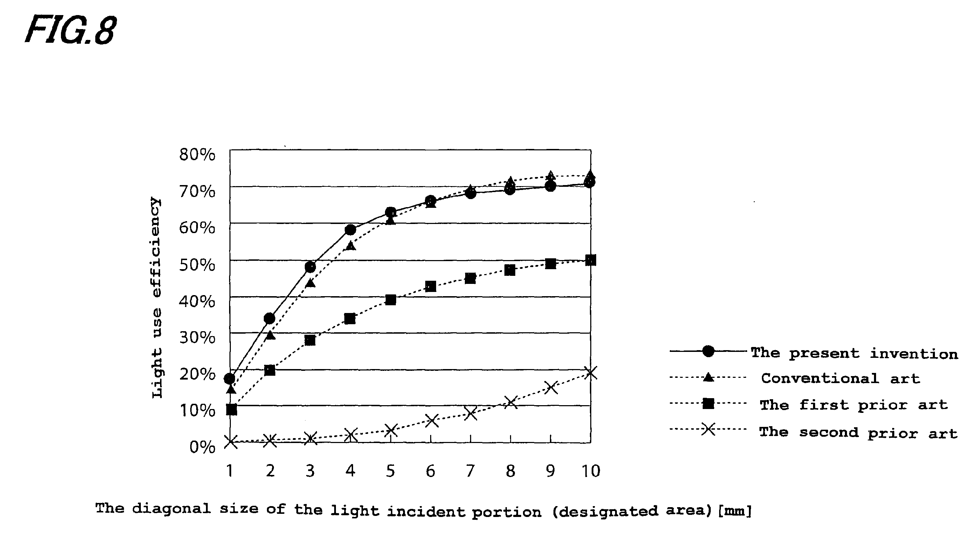

FIG. 8 shows the results of the use efficiency of the outgoing light emitted from a light source when the diagonal size of the predetermined area of the present invention is varied. FIG. 8 is a comparative chart showing the results of the use efficiency of the outgoing light emitted from a light source when the diagonal size of the predetermined area is varied.

In the chart, the "solid circles" represent the present invention; the "solid triangles" represent a conventional light source device, which has been put to practical use and has the electrode axis of the arc tube arranged parallel with the optical axis and uses a reflector having an ellipsoidal reflecting surface; the "solid squares" represent a light source device (the first prior art), which has been proposed previously and has the electrode axis of the arc tube arranged approximately perpendicularly to the optical axis and uses a reflector having an ellipsoid; and the "crosses" represent a light source device (the second prior art), which has the electrode axis of the arc tube arranged approximately perpendicularly to the optical axis and uses a reflector having a spherical reflecting surface and the like.

The design conditions were selected so that the arc gap of the arc tube was 1.05 (mm), the maximum angle of light emission from the opening of the light source device was 30 degrees, and the distance from the light source to the condensed spot was not longer than 50 (mm). The reflector's opening diameter, effective lens diameter were specified to be 40 (mm) or smaller.

Though the aforementioned prior art (represented by solid triangles) entails loss of light since light beams irradiate the sealed portions of the arc tube partly located in the optical axis direction, the use efficiency of the outgoing light emitted from the light source is higher than that of the first and second prior art light source devices.
In the first prior art, essentially, the only collected light beams are those reflected off the ellipsoidal surface of the reflector, this configuration has a 10% loss of light compared to the light source device of the present invention when the diagonal size at the desired condensed spot Sp is 5 to 10 (mm).

Concerning the second prior art, this configuration is unpreferable for illumination on a micro condensed spot; when the diagonal size of the desired condensed spot Sp was 10 (mm), the use efficiency of the outgoing light emitted from the light source was about 20 (%).
For the lens of the second prior art, glass materials having an index of refraction ranging 1.46 to 1.98 were used for estimation. In FIG. 8, data with the index of refraction set at 1.98 is shown. As the glass material which will not degrade under the high temperature atmosphere near the arc tube, quartz and synthesized quartz can be considered, whose index of refraction is about 1.46, which cause a further reduction in the use efficiency of outgoing light emitted from the light source. As other glass materials, sapphire (index of refraction: 1.77) and diamond (index of refraction: 2.4) can be mentioned but are unpractical because they are expensive.

The light source device B according to the first embodiment has the equivalent use efficiency of the outgoing light emitted from the light source to that of the light source device according to the conventional art that has been put to practical use, and when the desired area is small in diameter, the use efficiency of the outgoing light emitted from the light source can be improved by 10 (%) from that of the prior art.

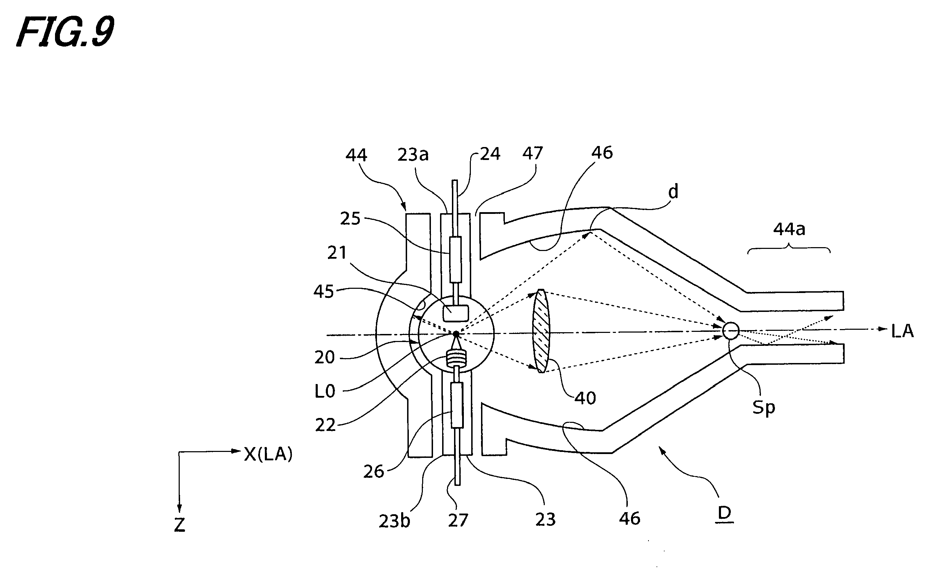

Next, a light source device D according to the third embodiment will be described with reference to FIG. 9.
FIG. 9 is a horizontal sectional view showing a basic configuration of a light source device D according to the third embodiment of the present invention.
Since the light source device D according to the third embodiment has the same configuration as that of the light source device according to the aforementioned first embodiment except the reflector configuration, the components equivalent to those are allotted with the same reference numerals without detailed description. Here, description will be made on only the reflector, which has a different configuration.

A reflector 44 is integrally formed of a first reflector portion 45 having a spherical surface centered at the light generation point L0 of arc tube 20, a second reflector portion 46 having a curved surface different from the first reflector portion 45, and a luminance equalization means 44a.
"A curved surface different from the first reflector portion 45" is an ellipsoid in the present embodiment, but is not limited to this. For example, a spherical surface that has a curvature different from that of the spherical surface of the aforementioned first reflector 45 may be used. Alternatively, curved surfaces other than spherical surfaces such as hyperboloids etc., may be used as has been already mentioned.

Formed between first reflector portion 45 and second reflector portion 46 is a light source fitting groove 47 having a predetermined width W, in which arc tube 20 is placed. "A predetermined width W" is as large as a clearance is marginally formed around sealed portions 23a and 23b of arc tube 20, and can be specified taking into consideration the degree of heat radiation of the arc tube 20, as has been already mentioned.

Specifically, reflector 44 is constructed such that a circular cone is extended from the opening portion of second reflector portion 46 of reflector 44 in a manner that will not block the propagation of the outgoing light beam along the path d-Sp with the maximum outgoing angle (the angle defined by L0-Sp-d), among the outgoing light beams that advance along paths L0-d-Sp and illuminate the reflector 44, and is connected to luminance equalization means 44a in the vicinity of condensed spot Sp.

Luminance equalization means 44a has a function of equalizing (flattening) the surface luminance of the light beams by shaping the outgoing light emitted from arc tube 20 into a designated pattern and by mixing using multiple reflection, and is formed of a cylindrical shape having a necessary length and arranged at the front end of reflector 44.
In other words, the outgoing light emitted from the light source is shaped into a designated pattern and mixed by multiple reflection to provide the function of making the surface luminance of the light beams uniform.
"A designated pattern" means a similar pattern to the light valve (here, the DMD shape = square).

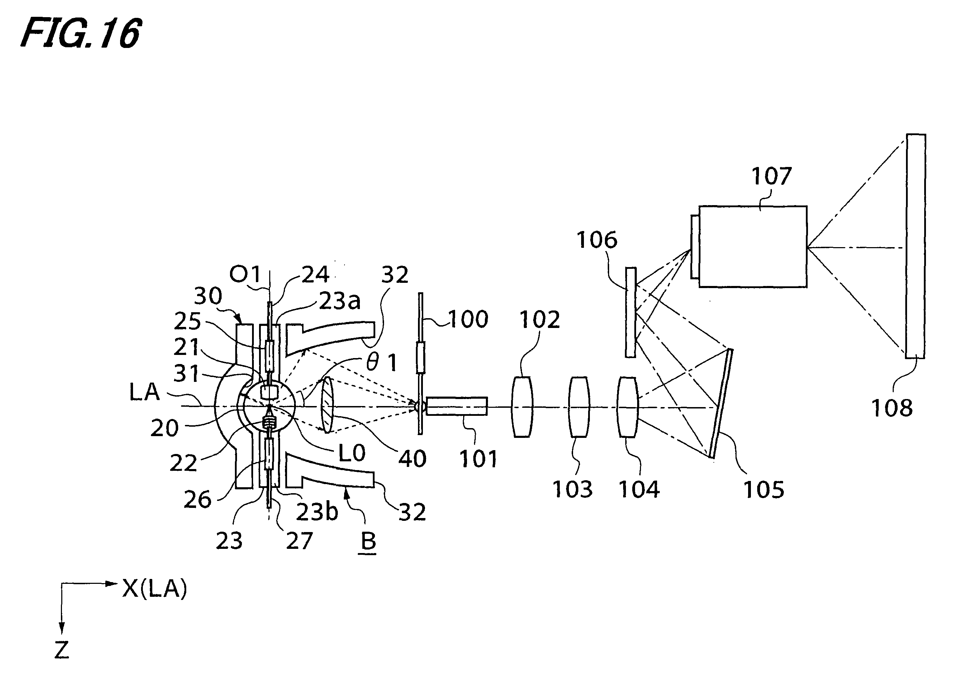

The shape of the opening of the luminance equalization means 44a is determined depending on the angle of emission from the light source device, the image forming magnification determined by the area of a light valve 206 and the incident angle, in an aftermentioned projection type video display apparatus shown in FIG. 16.
The inner surface of luminance equalization means 44a may be formed in the following manner. · Similarly to second reflector portion 46 and first reflector portion 45, a heat conversion layer for the infrared component and a smoothened layer and a dielectric reflection multi-layered film consisting of $TiO_2$ and $SiO_2$ are formed. · Other than the formation of dielectric reflection multi-layered film, it is possible to use an aluminum substrate (metal substrate) which is simply polished or it is possible to process total-reflection film vapor deposition and high-reflection coating of silver and the like over the aluminum substrate.

Further, when a lens rod integrator is built in the inner surface of the luminance equalization means 44a, it is no longer necessary to perform film forming on the inner surface of luminance equalization means 44 and hence it is possible to realize an anti-explosion device in a simple manner.

Moreover, use of a glass material such as fluorite, which converts ultraviolet rays and infrared rays into visible light rays, as the lens rod integrator makes it possible to improve the use efficiency of the outgoing light emitted from the light source.

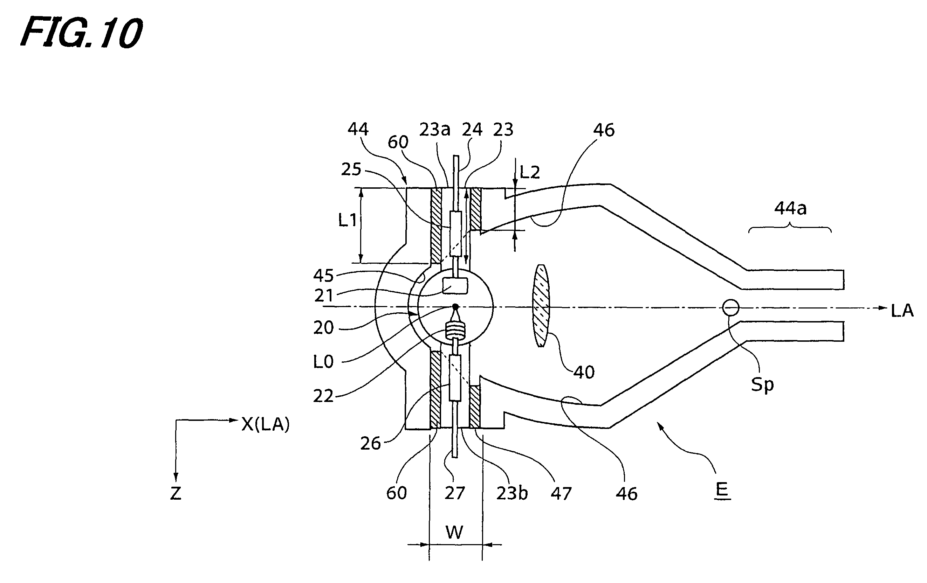

A light source device E according to the fourth embodiment will be described with reference to FIG. 10. FIG. 10 is a horizontal sectional view showing a light source device E according to the fourth embodiment.

Since the light source device E according to the fourth embodiment has the same configuration as that of the light source device according to the aforementioned third embodiment except in that radiating members are provided, the components equivalent to those are allotted with the same reference numerals without detailed description. Here, description will be made on the radiating members only.

Radiating members 60, 60 each have an inside diameter that approximately corresponds to the outside diameter of sealed portions 23a and 23b and have an outside diameter that approximately corresponds to the clearance W of reflector 44, are each formed of a simple cylinder which has a length L1 or a cylinder which is formed obliquely at one end thereof having lengths L1 and L2 corresponding to the lengths of the reflector 44's walls that oppose the sealed portion 23a (23b), and are formed of a metal having good thermal conductivity, material containing ceramics (alumina), cement or the like. If some gaps form between reflector 44 and radiating members 60, 60, between sealed portions 23a, 23b and radiating members 60, 60, the gaps may be filled up with heat-resisting cement, grease or an oil compound, as necessary.

With this arrangement, it is possible to efficiently conduct heat from arc tube 20 during continuous illumination to reflector 44, whereby it is possible to achieve temperature control of arc tube 20 for optimal illumination. It is of course possible to apply these radiating members to the light source devices of the individual embodiments illustrated with reference to FIGS. 1 to 6.

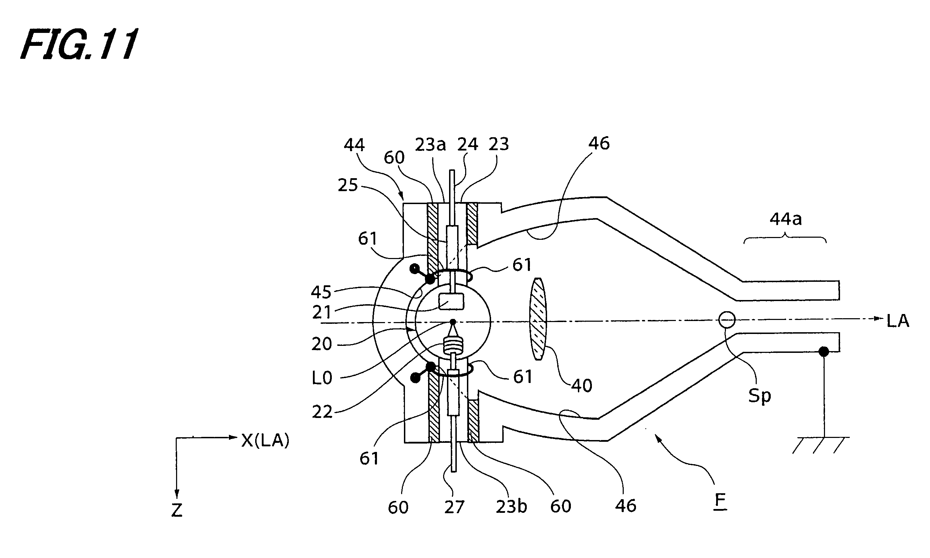

A light source device F according to the fifth embodiment will be described with reference to FIG. 11. FIG. 11 is a horizontal sectional view showing a light source device F according to the fifth embodiment.

Since the light source device F according to the fifth embodiment has the same configuration as that of the light source device according to the aforementioned fourth embodiment except in that auxiliary electrodes are provided and the reflector is grounded, the components equivalent to those are allotted with the same reference numerals without detailed description, and only the differences will be described herein.

Auxiliary electrodes 61, 61 have annular configurations that enclose sealed portions 23a and 23b of arc tube 20 at their proximal side, and are electrically connected to the vicinity of the ends of first reflector portion 45 of reflector 44. With this arrangement, it is possible to improve the starting performance of arc tube 20, and it is possible to arrange the auxiliary electrodes in the space other than the light output distribution of arc tube 20, hence the use efficiency of the outgoing light emitted from the light source will not be degraded.

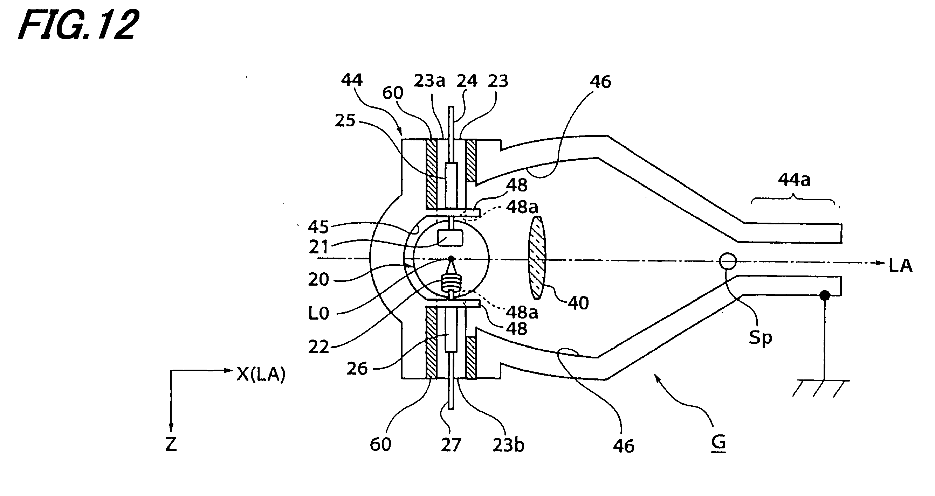

A light source device G according to the sixth embodiment will be described with reference to FIG. 12. FIG. 12 is a horizontal sectional view showing a light source device G according to the sixth embodiment.

Since the light source device G according to the sixth embodiment has the same configuration as that of the light source device according to the aforementioned fifth embodiment except in that the auxiliary electrodes are integrally formed with the reflector, the components equivalent to those are allotted with the same reference numerals without detailed description, and only the differences will be described herein.

Auxiliary electrode members 48, 48 of a rectangular parallelepiped having a necessary length are projectively formed at the vicinity at both end parts of first reflector portion 45 of reflector 44.

Auxiliary electrode members 48, 48 have circular fit-in holes 48a, 48a having diameters that correspond to the outside diameters of sealed portions 23a and 23b of arc tube 20. With this arrangement, it is possible to improve the starting performance of arc tube 20, and it is also possible to arrange the auxiliary electrodes in the space other than the light output distribution of arc tube 20, hence the use efficiency of the outgoing light emitted from the light source will not be degraded, similarly to that described as to the fifth embodiment.

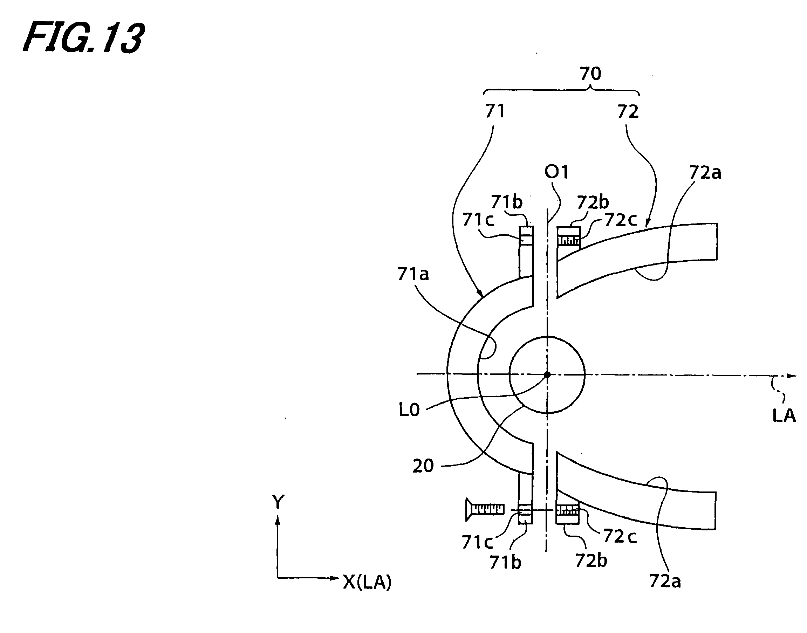

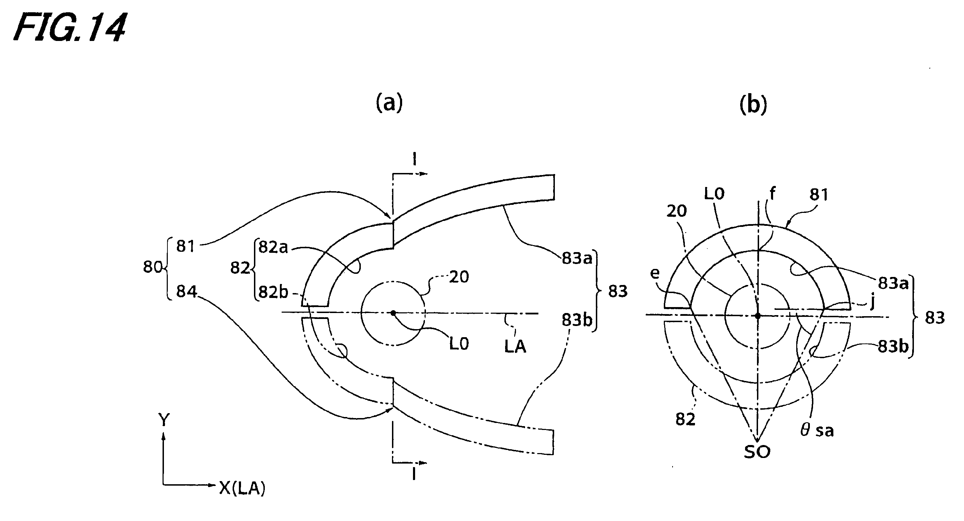

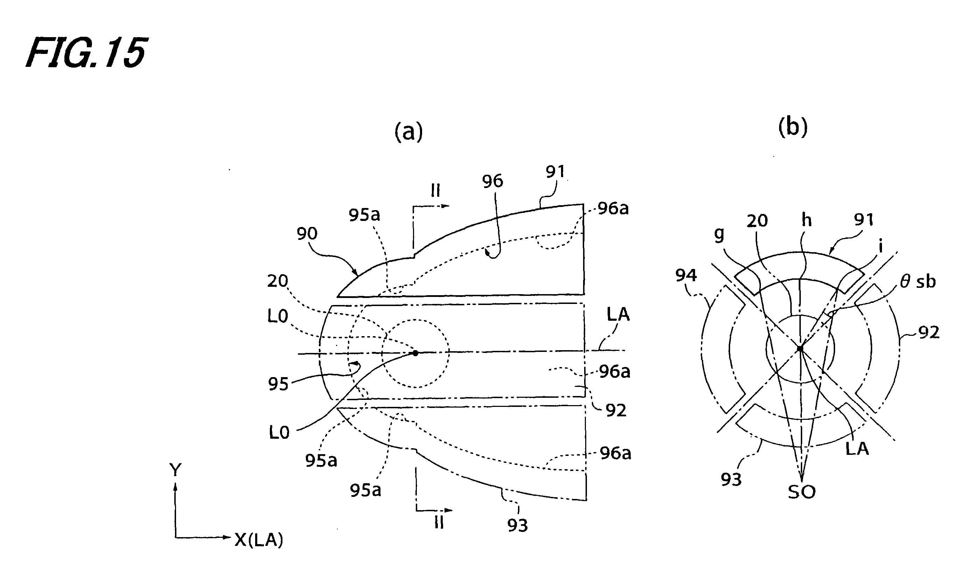

Referring to FIGS. 13 to 15, variational examples of reflectors will be described. FIG. 13 is a schematic view showing a reflector according to the first variational example; FIG. 14 (a) is a schematic horizontal sectional view showing a reflector of the second variational example; (b) is a sectional view cut along a line I-I shown in (a); FIG. 15 is a schematic horizontal sectional view showing a reflector of the third variational example; and (b) is a sectional view cut along a line II-II shown in (a).

A reflector 70 according to the first variational example shown in FIG. 13 is composed of a reflector part 71 formed with a first reflector portion 71a having a spherical surface centered at light generation point L0 of arc tube 20 and a reflector part 72 formed with a second reflector portion 72a having a curved surface different from first reflector portion 71a.

Reflector parts 71 and 72 are constructed so as to be separated along a plane that contain electrode axis O1. That is, reflector part 71 and reflector part 72 can be separated in a direction perpendicular to optical axis LA. Flanges 71b having non-threaded bolt holes 71c are projectively formed along the separated face of reflector part 71 while flanges 72b having threaded bolt holes 72c are projectively formed along the separated face of reflector part 72, so that the reflector parts can be easily joined to and separated from each other by means of these flanges 71b and 72b with bolts etc.

In the present embodiment, bolts (screws) having the same material as that of the substrate of reflector 70 are used for screw-fastening. This is because if bolts (screws) of a different material are used, deformation and screw breakage occurs due to difference in thermal expansion ratio. That is, it is possible to prevent deformation and screw breakage from occurring by using bolts (screws) having the same material as the substrate of reflector 70 for screw-fastening.

As another configuration, it is possible to fix the reflector parts to each other by simply fitting one reflector part to the other using projections and indentations formed therein for coupling and providing a separate holding mechanism.

Though "a curved surface different from first reflector portion 71a" here is an ellipsoid, a spherical surface different in curvature from the spherical surface of the first reflector portion 71a may be used. Alternatively, a curved surface other than spherical surfaces, such as hyperboloids, is also acceptable.

When vapor deposition film is formed on a reflector having a composite shape, the lamination thickness of the film and film density become uneven depending on the difference in curvature, the flight distance of vapor deposition molecules, and the incident angle of vapor deposition molecules on the film forming surface. For this reason, the reflector 70 shown in FIG. 13 is divided into reflecting surface pieces having individual curvatures, so as to determine the vapor deposition conditions for film forming on each of the concentric spherical and ellipsoidal surfaces, whereby it is possible to realize a reflector having good reflectance for the visible light range, and hence improve the use efficiency of the outgoing light emitted from the light source.

A reflector 80 according to the second variational example shown in FIGS. 14 (a) and (b) is formed of a top-half reflector part 81 composed of a top half 82a of a first reflector 82 having a spherical surface centered at light generation point L0 of arc tube 20 and a top half 83a of a second reflector portion 83 having a curved surface different from first reflector portion 82, and a bottom-half reflector part 84 composed of a bottom half 82b of the first reflector 82 having a spherical surface centered at light generation point L0 of arc tube 20 and a bottom half 83b of the second reflector portion 83 having a curved surface different from first reflector portion 82.

In other words, reflector 80 is constructed so as to be divided along the optical axis LA. This divided structure is especially effective for a reflector that is small and has a large depth.

However, the angle θsa formed between the line S0-e that connects a vapor deposition source So and a position e on the reflection film forming surface and the normal to the reflection film forming surface is relatively large. This means that the incident angle of the vapor deposition molecules onto the position e on the reflection film forming surface is large, accordingly, the film forming at this part is not good compared to that at a position f on the reflection film forming surface.

A reflector 90 according to the third variational example is composed of four right-angled reflector parts 91 to 94, into which the reflector is separated along the optical axis LA as its center.

Each reflector part 91 (92 to 94) is formed of a quadrant portion 95a of the first reflector 95 of a spherical surface centered at light generation point L0 of arc tube 20 and a quadrant portion 96a of second reflector portion 96 having a curved surface different from the first reflector 95.

In this way, as the number (number of parts) of reflector parts is increased, the flight distances of vapor deposition molecules from vapor deposition source S0 to positions g, h and i on the reflection film forming surface become equal and the incident angles of vapor deposition molecules can be equalized.

Concerning the film forming result at the position i on the reflection film forming surface, double precision could be obtained compared to that at the position j on the reflection film forming surface shown in FIG. 14. Further, since all the separated reflector parts have the same shape, a large number of reflector parts can be film formed by one batch vapor disposition processing, no change occurs from before in view of cost even though the separated structure is adopted.

Next, a video display apparatus using the light source device according to any of the above embodiments will be described with reference to FIG. 16. FIG. 16 is a schematic view showing an overall configuration of a video display apparatus according to one embodiment of the present invention. In FIG. 16, an example in which the light source device B shown in FIG. 1 is used is described, but instead of light source device B light source devices C, D, E, F and G may be adopted.

A video display apparatus H according to one embodiment of the present invention is composed of the light source device B, a color wheel 100, a rod integrator 101, lenses 102 to 104, a mirror 105, a light valve 106 and a projection lens 107. Designated at 108 is a screen.

Outgoing light emitted from arc tube 20 of light source device B is reflected off reflector 30 and is condensed on the incident face of rod integrator 101.

Color wheel 100 is disposed before the incident face of rod integrator P4 and is disc-shaped having R (red) filters, G (green) filters and B (blue) filters, arranged along the direction of circumference.

Rod integrator 101 shapes the incident light thereto so as to emit a bundle of light rays having a desired sectional shape corresponding to the flat face shape (rectangle or square in this case) of light valve 106 with uniform luminance at all points.

As color wheel 100 rotates, the reflected light from the reflector 30 passes through the R, G and B filters, whereby the transmitted light corresponding to these R, G and B filters sequentially enter the rod integrator 101.

Light valve 106 is a projection medium for creating projected images and composed of a DMD (digital micro-mirror device). In the case of a DMD, mirrors for micro segments are controlled as to their directions of reflection in accordance with the designated projected image, to form a projection light image formed of colors of light created by the R, G and B filters.

The light beams are equalized as to the luminance on the desired plane by rod integrator 101, and advance through the optical system including lenses 102 to 104 and mirror 105 and become incident on light valve 106, where a projection light image is created.

The projection light image formed by light valve 106 passes through projection lens 107 to be irradiated onto screen 108 for image projection.

It should be noted that the present invention is not be limited to any of the aforementioned embodiments, and variations as follows can be made possible.

The light source device according to each of the aforementioned embodiments has been explained as the light source device for a projection type video display apparatus, but should not be limited to this and can be used as a light source for other apparatuses.

Concerning projection type video display apparatuses, the light source device according to each of the embodiments of the present invention can be applied to other configurations than that shown in FIG. 16, wherein a different light path is employed or a light valve 106 of a liquid crystal type is used.

Though in the above embodiments, light sources using arc tubes were shown, but instead of this any other known light source can of course be used.

Industrial Applicability

The present invention is to provide a high-luminance light source using an arc tube which achieves illumination by causing arc discharge, such as a metal halide lamp, xenon short arc lamp and high-pressure type mercury lamp, the light source having a simple and compact configuration, still being improved in efficiency of light condensation to a predetermined small-diametric area. Accordingly, it is possible to provide a light source device free from lowering of light collection efficiency and apply it to a projection type video display apparatus that needs such a high luminance light source device.

**Claims**

1. A light source device comprising: an arc tube having a pair of main electrodes arranged on one electrode axis; and a reflector for reflecting an outgoing light emitted from the arc tube, the electrode axis of the main electrodes being arranged to cross a light axis of the outgoing light, wherein the reflector is formed of a first reflector portion having a spherical surface centered at a light generation point of the arc tube and a second reflector portion having a curved surface different from the first reflector portion, and
a condenser that condenses the outgoing light emitted from the arc tube to other than the second reflector portion so as to illuminate the condensed outgoing light in a predetermined direction or to a predetermined area is provided.

2. The light source device according to Claim 1 wherein the second reflector portion is formed with an ellipsoid.

3. The light source device according to Claim 1 wherein the second reflector portion is formed with a hyperboloid.

4. The light source device according to Claim 1 wherein the second reflector portion is formed with a spherical surface having a curvature different from the spherical surface of the first reflector portion.

5. The light source device according to any one of Claims 1 to 4, further comprising a luminance equalization means for equalizing a surface luminance of the light beams by shaping the outgoing light emitted from the arc tube into a designated pattern and by mixing by multiple reflection.

**6.** The light source device according to any one of Claims 1 to 4, further comprising a luminance equalization means for equalizing a surface luminance of the light beams by shaping the outgoing light emitted from a light source into a designated pattern and by mixing by multiple reflection.

**7.** The light source device according to Claim 5 or 6, wherein the reflector and the luminance equalization means are integrally formed.

**8.** The light source device according to any one of Claims 1 to 7, wherein sealed portions that seal the main electrodes are formed on both sides of the light generation point of the arc tube, and heat radiation members are arranged between the sealed portions and the reflector.

**9.** The light source device according to any one of Claims 1 to 8, wherein the reflector has a separable structure such that it can be separated along a plane perpendicular to the optical axis.

**10.** The light source device according to any one of Claims 1 to 9, wherein the reflector has a separable structure such that it can be separated along a plane parallel to the optical axis.

**11.** A video display apparatus in which the light source device according to any one of Claims 1 to 10 is used.

*FIG.1*

FIG.2

EP 1 722 270 A1

FIG.3

# FIG.4

EP 1 722 270 A1

# FIG.5

(a)

(b)

EP 1 722 270 A1

FIG.6

FIG.7

## FIG.8

The diagonal size of the light incident portion (designated area) [mm]

EP 1 722 270 A1

# FIG.9

EP 1 722 270 A1

# FIG.10

EP 1 722 270 A1

*FIG.11*

FIG.12

# FIG.13

FIG.14

(a)

(b)

# *FIG.15*

(a)

(b)

EP 1 722 270 A1

*FIG.16*

*FIG.17*

EP 1 722 270 A1

(a)

(b)

# FIG.18

EP 1 722 270 A1

**FIG.19**

# FIG.20

EP 1 722 270 A1

# FIG.21

EP 1 722 270 A1

# FIG.22

EP 1 722 270 A1

# FIG.23

EP 1 722 270 A1

**EP 1 722 270 A1**

<table>
<tr><td colspan="2">**INTERNATIONAL SEARCH REPORT**</td><td>International application No.<br>PCT/JP2005/002794</td></tr>
</table>

A. CLASSIFICATION OF SUBJECT MATTER
  Int.Cl⁷ G03B21/20, F21S2/00, F21V7/09, 7/10, 13/00, 29/00, G02B5/10

According to International Patent Classification (IPC) or to both national classification and IPC

B. FIELDS SEARCHED

Minimum documentation searched (classification system followed by classification symbols)
  Int.Cl⁷ G03B21/00-21/30, F21S2/00, F21V7/09, 7/10, 13/00, 29/00, G02B5/10

Documentation searched other than minimum documentation to the extent that such documents are included in the fields searched
  Jitsuyo Shinan Koho        1922-1996    Jitsuyo Shinan Toroku Koho    1996-2005
  Kokai Jitsuyo Shinan Koho  1971-2005    Toroku Jitsuyo Shinan Koho    1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-249405 A  (Seiko Epson Corp.),<br>14 September, 2001 (14.09.01),<br>Full text; all drawings<br>& US 2004-0070470 A1    & EP 1246359 A2<br>& CN 1378339 A | 1,2,4,11<br>3,5-10 |
| A | JP 10-257413 A  (Omron Corp.),<br>25 September, 1998 (25.09.98),<br>Par. No. [0015]; Fig. 1<br>(Family: none) | 1 |
| Y | JP 10-186515 A  (Minolta Co., Ltd.),<br>14 July, 1998 (14.07.98),<br>Par. Nos. [0099] to [0101]; Figs. 4 to 6<br>(Family: none) | 3 |

[X] Further documents are listed in the continuation of Box C.        [ ] See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>  13 May, 2005 (13.05.05) | Date of mailing of the international search report<br>  31 May, 2005 (31.05.05) |
|---|---|
| Name and mailing address of the ISA/<br>  Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2005/002794

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-523527 A  (FUSION LIGHTING, INC.),<br>05 August, 2003 (05.08.03),<br>Par. Nos. [0142] to [0145]; Fig. 54<br>& EP 1266250 A          & WO 01/27962 A2<br>& AU 1328001 A          & TW 498391 B<br>& CN 1471646 T | 5-7 |
| Y | JP 2001-042433 A  (STROBL, Karlheinz),<br>16 February, 2001 (16.02.01),<br>Par. Nos. [0106], [0206]; Figs. 7, 18<br>& US 635670 B1          & EP 1029198 A<br>& WO 99/64784 A1          & AU 4548499 A<br>& CA 2339545 A          & CN 1127669 B<br>& AU 747281 B | 5-7 |
| Y | JP 2000-231903 A  (Matsushita Electric<br>Industrial Co., Ltd.),<br>22 August, 2000 (22.08.00),<br>Par. No. [0071]; Fig. 10<br>& US 6559600 B          & US 2003-155864 A1 | 8 |
| Y | JP 2003-208801 A  (Hitachi, Ltd.),<br>25 July, 2003 (25.07.03),<br>Full text; all drawings<br>& US 2003-86271 A          & CN 1417635 A<br>& TW 528919 B | 9,10 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2055325 A
- JP 4242064 A
- JP 6214115 A

- JP H255325 A
- JP H4242064 A
- JP H6214115 A